# EUROPÄISCHE PATENTSCHRIFT

(11) **EP 3 763 026 B1**
(45) Veröffentlichungstag und Bekanntmachung des Hinweises auf die Patenterteilung: **09.04.2025**
(21) Anmeldenummer: 19706373.8
(22) Anmeldetag: 15.02.2019
(51) Int. Cl.: H02M 1/15, H02M 5/458, H02J 7/34, H02M 1/00, H02P 27/06

(54) **VERFAHREN ZUM BETREIBEN EINES ELEKTRISCHEN ANTRIEBSSYSTEMS MIT ENERGIESPEICHER UND ANTRIEBSSYSTEM ZUR DURCHFÜHRUNG EINES SOLCHEN VERFAHRENS**
METHOD OF OPERATING AN ELECTRIC DRIVE SYSTEM WITH ENERGY STORAGE AND DEVICE FOR CARRYING OUT SAID METHOD
PROCÉDÉ D'OPÉRATION D'UN SYSTÈME D'ENTRAINEMENT ÉLECTRIQUE AVEC ACCUMULATEUR D'ÉNERGIE ET DISPOSITIF POUR RÉALISER CE PROCÉDÉ

(30) Priorität: 05.03.2018 DE 102018001685
(43) Veröffentlichungstag der Anmeldung: 13.01.2021
(73) Patentinhaber: SEW-EURODRIVE GmbH & Co. KG, 76646 Bruchsal (DE)
(72) Erfinder: SCHMIDT, Josef, 76676 Graben-Neudorf (DE); HAUCK, Matthias, 68723 Schwetzingen (DE)
(86) Internationale Anmeldenummer: PCT/EP2019/025045
(87) Internationale Veröffentlichungsnummer: WO 2019/170291

(56) Entgegenhaltungen:
- EP-A2- 0 683 560
- DE-T5- 112013 004 316
- DE-T5- 112013 004 316
- WANG HUAI ET AL: "Use of a Series Voltage Compensator for Reduction of the DC-Link Capacitance in a Capacitor-Supported System", IEEE TRANSACTIONS ON POWER ELECTRONICS, INSTITUTE OF ELECTRICAL AND ELECTRONICS ENGINEERS, USA, vol. 29, no. 3, 1 March 2014 (2014-03-01), pages 1163 - 1175, XP011527261, ISSN: 0885-8993, [retrieved on 20130918], DOI: 10.1109/TPEL.2013.2262057

## Beschreibung

Die Erfindung betrifft ein Verfahren zum Betreiben eines Antriebssystems und Antriebssystem zur Durchführung eines solchen Verfahrens.

Umrichtergespeiste Elektromotoren sind allgemein bekannt.

Aus der EP 2 819 271 A1 ist ein Energiespeichermodul mit Gleichspannungszwischenkreis bekannt.

Aus der EP 2 525 481 A1 ist eine Steuereinrichtung für einen Zwischenkreisumrichter bekannt.

Aus der DE 101 50 347 A1 ist ein schwerer Lüfter für Drehstrommotoren in Anlagen zur Personenbeförderung bekannt.

**Aus der** EP 0 683 560 A2 **ist als nächstliegender Stand der Technik eine Umrichterschaltungsanordnung mit elektronisch unterstütztem Energiespeicher im Zwischenkreis bekannt, wobei die Spannungsverzerrung der Zwischenkreisspannung und die Stromabweichung einem Regler zugeführt werden.**

**Aus der Veröffentlichung XP011527261 ist ein Reihenspannungskompensator für die Reduktion einer Zwischenkreiskapazität bekannt.**

**Aus der** DE 11 2013 004316 T5 **ist ein Wechselstrom-Antriebssystem bekannt.**

Der Erfindung liegt daher die Aufgabe zugrunde, ein Antriebssystem möglichst selbstversorgend weiterzubilden, insbesondere also derart, dass möglichst wenig Leistung und diese möglichst gleichmäßig vom Wechselspannungsversorgungsnetz zugeführt wird.

Erfindungsgemäß wird die Aufgabe durch ein Verfahren nach Anspruch 1 und eine Vorrichtung nach Anspruch 6 gelöst.

Von Vorteil ist dabei, dass der Energiespeicher abhängig von der Zwischenkreisspannung gesteuert wird. Wenn also die Welligkeit der Zwischenkreisspannung niedrig ist, weil der Elektromotor generatorisch betrieben wird, wird der Energiespeicher aufgeladen und Energie dem Zwischenkreis entnommen.

Steigt die Welligkeit der Zwischenkreisspannung wegen motorischen Betriebs des Motors an, wird der Energiespeicher entladen und somit die gespeicherte Energie dem Zwischenkreis zur Verfügung gestellt, so dass die Entnahme von elektrischer Leistung aus dem Wechselspannungsversorgungsnetz verhinderbar oder zumindest verminderbar ist.

Weitere Vorteile ergeben sich aus den Unteransprüchen.

Die Erfindung wird nun anhand von schematischen Abbildungen näher erläutert:

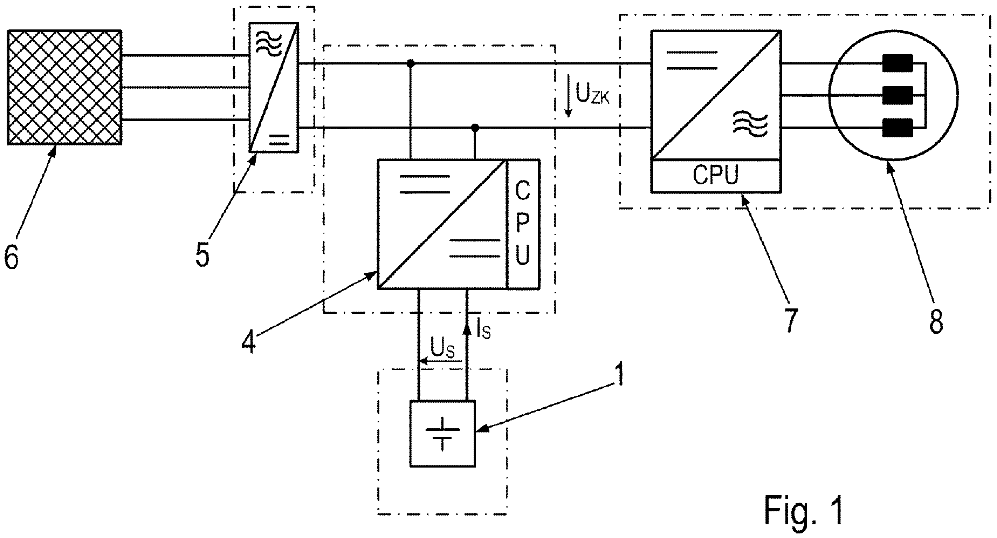

In der Figur 1 ist der Schaltplan eines erfindungsgemäßen Antriebssystems schematisch dargestellt.

In der Figur 2 ist ein Ausschnitt eines Regelverfahrens schematisch dargestellt, vom dem allerdings nur die mit (22) bezeichnete Struktur unter den Schutzumfang der Ansprüche fällt.

In der Figur 3 ist ein Zustandsablauf schematisch skizziert, wobei sich der beanspruchte Schutzumfang auf den Zustand Z2 beschränkt.

Wie in den Figuren dargestellt weist das Antriebssystem einen Energiespeicher 1 auf.

Der Energiespeicher 1 ist über einen DC/DC-Wandler 4 mit einem Zwischenkreis verbunden.

Dabei ist der Energiefluss zwischen DC/DC-Wandler 4 und Zwischenkreis bidirektional steuerbar. Der DC/DC-Wandler 4 ist also bidirektional betreibbar ist, so dass der vom DC/DC-Wandler 4 gesteuerte Leistungsfluss entweder zum Energiespeicher 1 hinströmt oder alternativ vom Energiespeicher 1 weg.

Der DC/DC-Wandler 4 stellt dem Energiespeicher Gleichspannung zur Verfügung.

Der dem Zwischenkreis zugewandte Anschluss des DC/DC-Wandlers 4 ist mit dem gleichspannungsseitigen Anschluss eines Gleichrichters 5 verbunden, an dessen wechselspannungsseitigen Anschluss ein Wechselspannungsversorgungsnetz 6 angeschlossen ist. Außerdem ist mit diesem Anschluss des Wandlers 4 der gleichspannungsseitige Anschluss eines Wechselrichters 7 verbunden, aus dessen wechselspannungsseitigem Anschluss ein Elektromotor 8 gespeist wird. Der Elektromotor 8 treibt eine Maschine, insbesondere ein Hubwerk, oder Anlage an und wird gemäß der dortigen Applikation betrieben. Hierbei ist zeitabschnittsweise ein motorischer oder ein generatorischer Betrieb vorgesehen.

Bei motorischer Betriebsweise des Elektromotors 8 sinkt die am gleichspannungsseitigen Anschluss des Wechselrichters 7 anliegende Spannung U_ZK, insbesondere Zwischenkreisspannung, ab und bei einem Zwischenkreis mit geringer Kapazität, insbesondere schlanken Zwischenkreis, steigt die Welligkeit der Zwischenkreisspannung an. Denn vom Gleichrichter ist bei zunehmendem Leistungsbedarf des Motors 8 zwar mehr Leistung aus dem Wechselspannungsversorgungsnetz 6 lieferbar, jedoch bricht dann die Spannung bei jeder Netzwelle stärker ein. Wird keine Leistung dem Zwischenkreis entnommen, ist eine sehr geringe Welligkeit der Zwischenkreisspannung erreichbar.

Um möglichst wenig Leistung aus dem Wechselspannungsversorgungsnetz 6 über den Gleichrichter 5 dem gleichspannungsseitigen Anschluss des Wechselrichters 7, insbesondere also dem Zwischenkreis, zuzuführen, wird dem Energiespeicher 1 Energie entnommen und somit elektrische Energie mittels des DC/DC-Wandlers 4 dem Zwischenkreis zugeführt.

Wichtig ist dabei, dass der DC/DC-Wandler 4 in bloßer Abhängigkeit des Wertes der erfassten Zwischenkreisspannung, U_ZK oder in bloßer Abhängigkeit von deren Verlauf den vom Energiespeicher 1 zum Zwischenkreis strömenden Leistungsfluss steuert.

Weitere vom Wechselrichter 7 stammende Informationen zur Steuerung dieses Leistungsflusses sind nicht vorhanden.

Der DC/DC-Wandler 4 weist eine Signalelektronik auf, welche Ansteuersignale für zumindest einen Halbleiterschalter eines Leistungsteils des DC/DC-Wandlers 4 erzeugt. Die Ansteuersignale sind vorzugsweise pulsweitenmoduliert.

Die Signalelektronik weist auch einen Regler auf, welcher den vom Energiespeicher 1 gelieferten Strom I_S auf einen Soll-Strom I_Soll hin regelt.

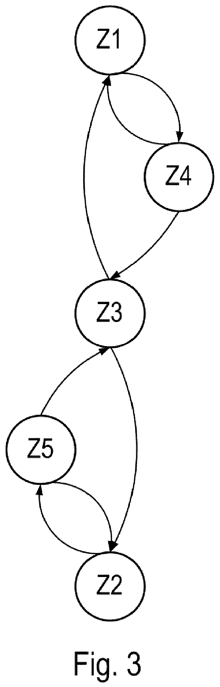

Wie in Figur 3 dargestellt, kann dieser Sollwert I_Soll prinzipiell abhängig von verschiedenen vorgegebenen Zuständen (Z1, Z2, Z3, Z4, Z5) des Antriebssystems erzeugt werden, wobei lediglich die alleinige Verwendung des Zustands Z2 in den Schutzumfang der unabhängigen Ansprüche fällt, wie weiter unten erklärt wird.

Hierzu ist eine jeweilige Struktur (21, 22, 23, 24) im Regler abhängig vom jeweils aktivierten Zustand ausgewählt. Ein Auswahlmittel 25 liefert also ausgangsseitig den Sollwert I_Soll, welcher abhängig von einem Eingangssignal Z_x eines von den an den Eingängen des Auswahlmittels anliegenden Sollwerte (I_Soll_1, I_Soll_2, I_Soll_3, I_Soll_4) auswählt. Das Eingangssignal Z_x repräsentiert dabei den jeweils aktivierten Zustand.

Bei dem Regler ist bei einem ersten Zustand Z1 eine erste Struktur 21 und bei einem zweiten Zustand Z2 eine zweite Struktur 22 aktiviert. Bei einem dritten Zustand Z3 ist eine dritte Struktur 23 aktiviert. Bei einem vierten Zustand Z4 und bei einem fünften Zustand Z5 ist eine vierte Struktur 24 aktiviert.

Jede der Strukturen (21, 22, 23, 24) liefert ausgangsseitig einen Strom-Sollwert (I_Soll_1, I_Soll_2, I_Soll_3, I_Soll_4).

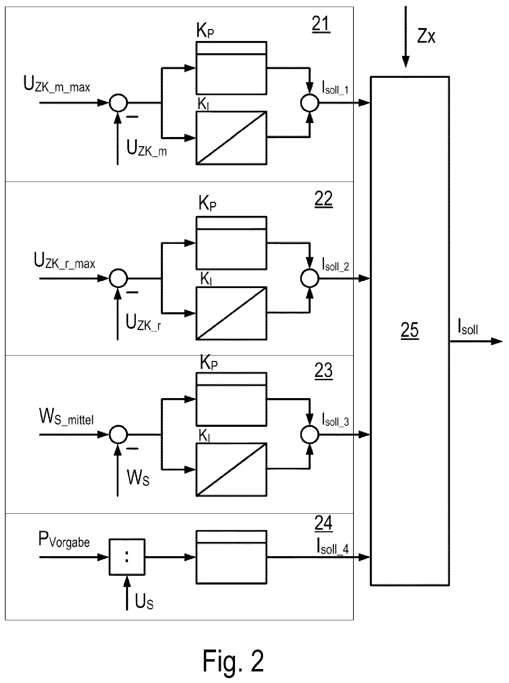

Wie in Figur 2 gezeigt, ist die dritte Struktur 23 als lineare Reglerstruktur, insbesondere PI-Regler, ausgeführt, dem eingangsseitig die Differenz aus dem Istwert und Sollwert der Ladeenergie des Energiespeichers 1 zugeführt wird. Ausgangsseitig erzeugt die lineare Reglerstruktur einen Soll-Strom I_Soll_3.

Die vierte Struktur 24 ist als Proportionalglied ausgeführt, dem eingangsseitig der Quotient aus einem Parameter P_Vorgabe und dem Istwert der am Energiespeicher 1 anliegenden Ladespannung U_S zugeführt wird. Ausgangsseitig erzeugt das Proportionalglied einen Soll-Strom I_Soll_4.

Die erste Struktur 21 ist als lineare Reglerstruktur, insbesondere Pl-Regler, ausgeführt, welchem eingangsseitig die Differenz aus einem als Parameter vorgegebenen Sollwert U_ZK_m_max, also ein Sollspannungswert, und einem bestimmten Wert zugeführt wird. Ausgangsseitig erzeugt die lineare Reglerstruktur einen Soll-Strom I_Soll_1. Der bestimmte Wert ist aus dem zeitlichen Verlauf der Zwischenkreisspannung U_ZK gebildet, insbesondere als Funktional des zeitlichen Verlaufs der Zwischenkreisspannung. Hierbei ist der bestimmte Wert der gleitende Mittelwert U_ZK_m, insbesondere der gleitende arithmetische Mittelwert, des zeitlichen Verlaufs der Zwischenkreisspannung U_ZK.

Die zweite Struktur 22, welche als einzige in den Schutzumfang der Ansprüche fällt, ist als lineare Reglerstruktur, insbesondere PI-Regler, ausgeführt, welchem eingangsseitig die Differenz aus einem als Parameter vorgegebenen Sollwert U_ZK_r_max, also ein Sollwert für Spannungswelligkeit, und einem bestimmten Wert zugeführt wird. Ausgangsseitig erzeugt die lineare Reglerstruktur einen Soll-Strom I_Soll_2.

Der bestimmte Wert ist aus dem zeitlichen Verlauf der Zwischenkreisspannung U_ZK gebildet, insbesondere als Funktional des zeitlichen Verlaufs der Zwischenkreisspannung. Hierbei ist der bestimmte Wert
als Wurzel aus dem gleitenden insbesondere arithmetischen Mittelwert der quadrierten Differenz zwischen dem zeitlichen Verlauf der Zwischenkreisspannung U_ZK und dem gleitenden insbesondere arithmetischen Mittelwert des zeitlichen Verlaufs der Zwischenkreisspannung U_ZK bestimmt und dann mit U_ZK_r bezeichnet und der Sollwert ist dann ein Sollspannungswert. Der bestimmte Wert beschreibt also die Welligkeit der Spannung am gleichspannungsseitigen Anschluss des Gleichrichters 5 und ähnelt einer Varianz, wobei der wesentliche Beitrag zum bestimmten Wert aber deterministisch ist. Ein Maß für die Welligkeit könnte auch durch eine aufwändigere Fourieranalyse oder durch eine frequenzselektive Filterung bestimmt werden, wobei die beiden letzteren Alternativen nicht unter den Schutzumfang der Ansprüche fallen.

Im ersten Zustand Z1, der nicht in den Schutzumfang der Ansprüche fällt, wird die erste Struktur 21 aktiviert und wird als Sollwert ein Maximalwert für den gleitenden insbesondere arithmetischen Mittelwert des zeitlichen Verlaufs der Zwischenkreisspannung U_ZK verwendet.

Im zweiten Zustand Z2, welcher als einziger Zustand in den Schutzumfang der Ansprüche fällt, wird die zweite Struktur 22 aktiviert und als Sollwert ein maximaler Wert für die Welligkeit der Zwischenkreisspannung, also Wurzel aus dem gleitenden insbesondere arithmetischen Mittelwert der quadrierten Differenz zwischen dem zeitlichen Verlauf der Zwischenkreisspannung U_ZK und dem gleitenden insbesondere arithmetischen Mittelwert des zeitlichen Verlaufs der Zwischenkreisspannung U_ZK vorgegeben, dann ist der bestimmt Wert eben die wie beschrieben ermittelte Welligkeit der Zwischenkreisspannung.

Die Wurzel aus dem gleitenden insbesondere arithmetischen Mittelwert der quadrierten Differenz zwischen dem zeitlichen Verlauf der Zwischenkreisspannung U_ZK und dem gleitenden insbesondere arithmetischen Mittelwert des zeitlichen Verlaufs der Zwischenkreisspannung U_ZK wird hier entweder als Welligkeit oder auch als mittlere Schwankungsbreite bezeichnet.

Im dritten Zustand Z3, der nicht in den Schutzumfang der Ansprüche fällt, wird die dritte Struktur 23 aktiviert und als Sollwert eine Soll-Ladungsenergie für den Energiespeicher vorgegeben.

Im vierten Zustand Z4, der nicht in den Schutzumfang der Ansprüche fällt, wird die vierte Struktur 24 aktiviert und als Sollwert eine Sollaufladeleistung P_Vorgabe = P_Auflade zum Aufladen des Energiespeichers 1 vorgegeben, der als Parameter hinterlegbar ist.

Im fünften Zustand Z5, der nicht in den Schutzumfang der Ansprüche fällt, wird ebenfalls die vierte Struktur 24 aktiviert und als Sollwert eine Sollentladeleistung P_Vorgabe = P_Entlade zum Entladen des Energiespeichers 1 vorgegeben, der als Parameter hinterlegbar ist.

Dabei ist der Wert des Parameters P_Auflade unterschiedlich zum Wert des Parameters P_Entlade, insbesondere negativ oder identisch Null.

Für eine jeweilige Zustandsänderung werden vom Auswahlmittel folgende Bedingungen auf Erfüllung überwacht.

Wenn der erfasste aktuelle Wert der Zwischenkreisspannung oder der zeitliche Mittelwert der Zwischenkreisspannung den Maximalwert U_ZK_m_max überschreitet, wird vom dritten Zustand Z3, falls dieser aktuell aktiviert ist, in den ersten Zustand Z1 geschaltet.

Wenn die dem Energiespeicher aktuell entnommene Leistung P_S den Parameter P_Entlade überschreitet, wobei dieser positiv ist, wird vom ersten Zustand Z1 in den vierten Zustand Z4 geschaltet.

Wenn der aktuell bestimmte Wert der Zwischenkreisspannung den Maximalwert U_ZK_m_max überschreitet, wird vom vierten Zustand Z4, falls dieser aktuell aktiviert ist, in den ersten Zustand Z1 zurückgeschaltet.

Wenn die im Energiespeicher 1 enthaltene Energie W_S kleiner ist als ein Wert, insbesondere als ein mittlerer Wert, W_S_mittel oder wenn der aktuell bestimmte Wert der mittleren Schwankungsbreite U_ZK_r, also Welligkeit, größer ist als der gewünschte Maximalwert U_ZK_r_max wird vom vierten Zustand Z4, falls dieser aktuell aktiviert ist, in den dritten Zustand Z3 geschaltet.

Wenn der aktuell bestimmte Wert der mittleren Schwankungsbreite U_ZK_r größer ist als der gewünschte Maximalwert U_ZK_r_max wird vom dritten Zustand Z3, falls dieser aktuell aktiviert ist, in den zweiten Zustand Z2 geschaltet.

Wenn die im Entladebetrieb dem Energiespeicher 1 entnommene Leistung P_S den Parameter P_Auflade unterschreitet, wird vom zweiten Zustand Z2, falls dieser aktiviert ist, in den fünften Zustand Z5 geschaltet. Dabei kann der Parameter P_Auflade negativ oder identisch gleich Null sein. Eine negative Speicherleistung bedeutet, dass der Energiespeicher geladen wird.

Wenn der aktuell bestimmte Wert der mittleren Schwankungsbreite U_ZK_r größer ist als der gewünschte Maximalwert U_ZK_r_max, wird vom fünften Zustand Z5, falls dieser aktuell aktiviert ist, in den zweiten Zustand Z2 geschaltet.

Wenn der Sollwert für die im Energiespeicher 1 vorhandene Energie größer ist als der Wert W_S_mittel, insbesondere also der gleitende insbesondere arithmetische Mittelwert des zeitlichen Verlaufs der Ladeenergie oder der mittlere Ladezustand oder die aktuell bestimmte Zwischenkreisspannung U_ZK oder der zeitliche Mittelwert der Zwischenkreisspannung U_ZK einen Maximalwert U_ZK_m_max überschreitet, wird vom fünften Zustand Z5, falls dieser aktuell aktiviert ist, in den dritten Zustand Z3 geschaltet.

Da im Zwischenkreis nur ein Folienkondensator mit einer Kapazität von weniger als 5µF pro kW Wechselrichterleistung angeordnet ist, nimmt die Welligkeit der Zwischenkreisspannung mit der insgesamt aus dem Zwischenkreis entnommenen Leistung zu, insbesondere streng monoton. Diese Abhängigkeit ist als Kennlinie darstellbar, die beinahe eine reine Proportionalität darstellt. Erfindungsgemäß wird von der ersten Struktur 22 die Welligkeit auf einen Sollwert hin geregelt. Dieser Sollwert entspricht also gemäß der Kennlinie einem Leistungswert an insgesamt aus dem Zwischenkreis entnommener Leistung, also der Leistung, die über den Gleichrichter aus dem Netz entnommen wird. Vorteil der Verwendung der Welligkeit ist auch, dass die Welligkeit weitgehend unabhängig von der Amplitude Netzspannung ist. Im Vergleich zur Verwendung des bloßen gleitenden Mittelwerts der Zwischenkreisspannung weist die Kennlinie im gesamten Betriebsbereich eine größere Steigung auf. Somit ermöglicht die Welligkeit eine besonders einfache Regelung.

Bei weiteren, nicht in den Schutzumfang der Erfindung fallenden Beispielen wird die mittlere Schwankungsbreite als gleitender insbesondere arithmetischer Mittelwert des Betrags der Differenz zwischen dem zeitlichen Verlauf der Zwischenkreisspannung U_ZK und dem gleitenden insbesondere arithmetischen Mittelwert des zeitlichen Verlaufs der Zwischenkreisspannung U_ZK bestimmt. Somit ist eine schnelle und einfache Berechnung ermöglicht, da nur der Betrag der Differenz gebildet und aufsummiert werden muss. Alternativ sind auch ähnliche Bestimmungen ausführbar, wie beispielsweise als quadratischer Mittelwert.

Bei weiteren, nicht in den Schutzumfang der Erfindung fallenden Beispielen wird mittels eines überlagerten Reglers der mittlere Ladezustand W_S_mittel derart verändert, dass im ersten Zustand Z1 nicht ein oberer Schwellwert, insbesondere nicht ein maximal zulässiger Ladezustand, überschritten und im zweiten Zustand Z2 nicht ein unterer Schwellwert, insbesondere ein minimal zulässiger Ladezustand, unterschritten wird. Dabei ist die Zeitkonstante der durch den überlagerten Regler bewirkten Regelung größer als die Zykluszeit der Applikation oder als die Zeitkonstante des mit der Leistungsregelung des DC/DC-Wandlers 4 beaufschlagten Reglers.

Bei weiteren erfindungsgemäßen Ausführungsbeispielen wird alternativ oder zusätzlich mittels eines überlagerten Reglers der Maximalwert U_ZK_r_Max der Spannungswelligkeit des zeitlichen Verlaufs der Zwischenkreisspannung U_ZK derart verändert, dass er einen möglichst kleinen Wert annimmt, aber der Energiespeicher 1 einen Schwellwert an Ladeenergie nicht unterschreitet.

Bei der Erfindung wird der Parameter P_Entlade nicht auf positive Werte und der Parameter P_Auflade wird nicht auf negative Werte beschränkt. Dadurch, dass P_Auflade positiv und größer als die maximal mögliche Leistung des DC/DC-Wandlers ist, wird der zweite Zustand Z2 nicht verlassen. Dies hat zur Folge, dass immer auf eine bestimmte Welligkeit U_ZK_r_max der Zwischenkreisspannung geregelt wird. Bei ausreichend dimensioniertem Energiespeichersystem, welches einen ausreichend großen Energieinhalt und eine ausreichend große Leistungsfähigkeit hat, führt dies dazu, dass eine bestimmt Welligkeit U_ZK_r_max nie überschritten wird und demzufolge die insgesamt bezogene Netzleistung nie einen Grenzwert überschreitet. Die Netzleistung und die Spannungswelligkeit kann aber ihren jeweiligen Grenzwert selbstverständlich unterschreiten, wenn zu einem bestimmten Zeitpunkt der Energiespeicher ausreichend geladen ist und die Applikation keine entsprechende motorische Leistung benötigt.

Bei einem weiteren erfindungsgemäßen Ausführungsbeispiel ist der Gleichrichter als rückspeisefähiger, insbesondere steuerbarer, Gleichrichter ausgeführt, insbesondere so dass elektrische Leistung aus dem Zwischenkreis ins Wechselspannungsversorgungsnetz rückspeibar ist, wenn die Zwischenkreisspannung U_ZK einen oberen Grenzwert überschreitet. Von Vorteil ist die erhöhte Sicherheit gegen unerlaubt hohe Werte der Zwischenkreisspannung.

### Bezugszeichenliste

1 Energiespeicher
4 bidirektionaler DC/DC-Wandler
5 Gleichrichter
6 Wechselspannungsversorgungsnetz
7 Wechselrichter
8 Elektromotor
20 Auswahl des Sollwerts
21 erste Struktur
22 zweite Struktur
23 dritte Struktur
24 vierte Struktur
25 Auswahlmittel zur Auswahl des Sollwertes des Drehmoments
Z1 erster Zustand, insbesondere Begrenzen der Zwischenkreisspannung U_ZK
Z2 zweiter Zustand, insbesondere Stützen der Zwischenkreisspannung U_ZK
Z3 dritter Zustand, insbesondere Ruhezustand des Energiespeichers
Z4 vierter Zustand, insbesondere gesteuertes Entladen des Energiespeichers
Z5 fünfter Zustand, insbesondere gesteuertes Aufladen des Energiespeichers
U_ZK_m gleitender Mittelwert der Zwischenkreisspannung U_ZK
U_ZK_r gleitende Schwankungsbreite der Zwischenkreisspannung U_ZK
P_Vorgabe Sollwert für eine Speicherleistung
P_Auflade Parameter Aufladeleistung
P_Entlade Parameter Entladeleistung
W_S_mittel mittlerer Ladezustand des Energiespeichers

## Patentansprüche

1. Verfahren zum Betreiben eines Antriebssystems,
wobei das Antriebssystem einen Gleichrichter (5), einen mit dem gleichspannungsseitigen Anschluss des Gleichrichters (5) über einen bidirektional betreibbaren DC/DC-Wandler (4) verbundenen Energiespeicher (1) und einen aus einem Wechselrichter (7) speisbaren Motor aufweist,
wobei der gleichspannungsseitige Anschluss des Wechselrichters (7) und ein erster gleichspannungsseitiger Anschluss des DC/DC-Wandlers (4) parallel geschaltet sind zum gleichspannungsseitigen Anschluss des Gleichrichters (5),
wobei der wechselspannungsseitige Anschluss des Wechselrichters (7) mit dem Motor verbunden ist und der zweite gleichspannungsseitige Anschluss des DC/DC-Wandlers (4) mit dem Energiespeicher (1) verbunden ist,
wobei der Energiespeicher (1) einen Kondensator oder eine Batterie aufweist,
wobei der Verlauf der am gleichspannungsseitigen Anschluss des Wechselrichters (7) anliegenden Spannung, also Zwischenkreisspannung U_ZK, insbesondere innerhalb des Wandlers (4), innerhalb des Gehäuses des Wandlers (4) und somit außerhalb des Gehäuses des Wechselrichters (7), erfasst wird und daraus der Wert U_ZK_r eines Maßes für eine Schwankungsbreite des Verlaufs bestimmt wird,
wobei der Wert U_ZK_r als Wurzel aus dem gleitenden, insbesondere arithmetischen, Mittelwert der quadrierten Differenz zwischen dem zeitlichen Verlauf der Zwischenkreisspannung U_ZK und dem gleitenden, insbesondere arithmetischen, Mittelwert des zeitlichen Verlaufs der Zwischenkreisspannung U_ZK bestimmt wird,
wobei der Wandler (4) in bloßer Abhängigkeit vom Wert U_ZK_r oder dessen Verlauf den mit dem Energiespeicher (1) ausgetauschten Leistungsfluss steuert, indem der Speicherstrom I_S, insbesondere der Ladestrom, des Energiespeichers (1) auf einen Sollwert I_Soll_2 hin geregelt wird,
wobei der Gleichrichter derart gestaltet ist und im Zwischenkreis nur ein Folienkondensator mit einer Kapazität von weniger als 5µF pro kW Wechselrichterleistung angeordnet ist, sodass die Welligkeit der Zwischenkreisspannung mit der insgesamt aus dem Zwischenkreis entnommenen Leistung zunimmt.

2. Verfahren nach Anspruch 1,
**dadurch gekennzeichnet, dass**
eine Struktur (22) eine lineare Reglerstruktur, insbesondere Pl-Regler, aufweist, durch welche ausgangsseitig der Strom-Sollwert I_Soll_2 bereit stellbar ist und welcher eingangsseitig die Differenz aus einem Sollwert U_ZK_r_max und dem bestimmten Wert U_ZK_r zugeführt wird.

3. Verfahren nach mindestens einem der vorangegangenen Ansprüche,
**dadurch gekennzeichnet, dass**
der wechselspannungsseitige Anschluss des Gleichrichters (5) aus einem Wechselspannungsversorgungsnetz (6) speisbar ist.

4. Verfahren nach mindestens einem der vorangegangenen Ansprüche,
**dadurch gekennzeichnet, dass**
der Gleichrichter (5) als rückspeisefähiger, insbesondere steuerbarer, Gleichrichter (5) ausgeführt ist, insbesondere so dass elektrische Leistung aus dem Zwischenkreis ins Wechselspannungsversorgungsnetz (6) rückspeisbar ist, wenn die Zwischenkreisspannung U_ZK einen oberen Grenzwert überschreitet.

5. Verfahren nach mindestens einem der vorangegangenen Ansprüche,
**dadurch gekennzeichnet, dass**
der Ladezustand des Energiespeichers (1) mittels eines Sensors erfasst wird.

6. Antriebssystem zur Durchführung eines Verfahrens nach mindestens einem der vorangegangenen Ansprüche,
wobei der Energiespeicher (1) einen Kondensator oder eine Batterie aufweist und der Elektromotor (8) vom Wechselrichter (7) speisbar ist,
wobei der Energiespeicher (1) über einen DC/DC-Wandler (4) mit dem gleichspannungsseitigen Anschluss eines den Elektromotor (8) speisenden Wechselrichters (7) verbunden ist,
wobei der DC/DC-Wandler (4) ein Mittel zur Erfassung der am ersten, also der am parallel zum gleichspannungsseitigen Anschluss des Wechselrichters (7) geschalteten, gleichspannungsseitigen Anschluss des DC/DC-Wandlers (4) anliegenden Spannung aufweist,
wobei der Wandler (4) einen Regler aufweist, der geeignet eingerichtet ist, den Speicherstrom I_S, insbesondere den Ladestrom, des Energiespeichers (1) auf einen Sollwert I_Soll_2 hin zu regeln.

## Claims

1. Method for operating a drive system,
wherein the drive system comprises a rectifier (5), an energy storage device (1), which is connected to the DC voltage-side terminal of the rectifier (5) by means of a bidirectionally operable DC-to-DC converter (4), and a motor that can be fed from an inverter (7),
wherein the DC voltage-side terminal of the inverter (7) and a first DC voltage-side terminal of the DC-to-DC converter (4) are wired in parallel with the DC voltage-side terminal of the rectifier (5),
wherein the AC voltage-side terminal of the inverter (7) is connected to the motor, and the second DC voltage-side terminal of the DC-to-DC converter (4) is connected to the energy storage device (1),
wherein the energy storage device (1) has a capacitor or a battery,
wherein the curve of the voltage applied to the DC voltage-side terminal of the inverter (7), i.e. the DC link voltage U_ZK, is detected in particular within the converter (4), within the casing of the converter (4) and thus outside the casing of the inverter (7), and the value U_ZK_r of a measure for a fluctuation range of the curve is determined therefrom,
wherein the value U_ZK_r is determined as the root of the moving, in particular arithmetic, average of the square of the difference between the time curve of the DC link voltage U_ZK and the moving, in particular arithmetic, average of the time curve of the DC link voltage U_ZK,
wherein the converter (4) controls the power flow exchanged with the energy storage device (1) in simple dependence on the value U_ZK_r or the curve thereof by controlling the storage current I_S, in particular the charging current, of the energy storage device (1) towards a desired value I_Soll_2,
wherein the rectifier is set up such, and just one film capacitor having a capacitance of less than 5 µF per kW of inverter power is arranged in the DC link such, that the ripple of the DC link voltage increases with the total power drawn from the DC link.

2. Method according to claim 1,
**characterised in that**
a structure (22) has a linear controller structure, in particular a PI controller, by which the desired current value I_Soll_2 can be provided at the output, and to the input of which the difference between a desired value U_ZK_r_max and the determined value U_ZK_r is supplied.

3. Method according to at least one of the preceding claims,
**characterised in that**
the AC voltage-side terminal of the rectifier (5) can be fed from an AC voltage supply grid (6).

4. Method according to at least one of the preceding claims,
**characterised in that**
the rectifier (5) is configured as a regenerative, in particular controllable, rectifier (5), in particular such that electric power can be fed back into the AC voltage supply grid (6) from the DC link when the DC link voltage U_ZK exceeds an upper limit value.

5. Method according to at least one of the preceding claims,
**characterised in that**
the charge of the energy storage device (1) is detected by means of a sensor.

6. Drive system for carrying out a method according to at least one of the preceding claims,
wherein the energy storage device (1) has a capacitor or a battery, and the electric motor (8) can be fed from the inverter (7),
wherein the energy storage device (1) is connected, by means of a DC-to-DC converter (4), to the DC voltage-side terminal of an inverter (7) that feeds the electric motor (8),
wherein the DC-to-DC converter (4) has a means for detecting the voltage applied to the first DC voltage-side terminal of the DC-to-DC converter (4), i.e. the voltage applied to the DC voltage-side terminal that is wired in parallel with the DC voltage-side terminal of the inverter (7),
wherein the converter (4) has a controller that is suitably configured for controlling the storage current I_S, in particular the charging current, of the energy storage device (1) towards a desired value I_Soll_2.

## Revendications

1. Procédé pour faire fonctionner un système d'entraînement,
le système d'entraînement comprenant un redresseur (5), un accumulateur d'énergie (1) connecté par l'intermédiaire d'un convertisseur CC/CC bidirectionnel (4) au raccord côté tension continue du redresseur (5) et un moteur pouvant être alimenté à partir d'un onduleur (7),
le raccord coté tension continue de l'onduleur (7) et un premier raccord coté tension continue du convertisseur CC/CC (4) étant connectés en parallèle au raccord coté tension continue du redresseur (5),
le raccord côté tension alternative de l'onduleur (7) étant connectée au moteur et le second raccord côté tension continue du convertisseur CC/CC (4) étant connectée à l'accumulateur d'énergie (1),
l'accumulateur d'énergie (1) présentant un condensateur ou une batterie,
la courbe de la tension présente au niveau du raccord côté tension continue de l'onduleur (7), c'est-à-dire la tension de circuit intermédiaire U_ZK, en particulier à l'intérieur du convertisseur (4), à l'intérieur du boîtier du convertisseur (4) et donc à l'extérieur du boîtier de l'onduleur (7), étant détectée, et la valeur U_ZK_r d'une mesure d'une largeur de variation de la courbe étant déterminée à partir de celle-ci,
la valeur U_ZK_r étant déterminée en tant que racine à partir de la moyenne glissante, en particulier arithmétique, de la différence quadratique entre la courbe temporelle de la tension de circuit intermédiaire U_ZK et la moyenne glissante, en particulier arithmétique, de la courbe temporelle de la tension de circuit intermédiaire U_ZK,
le convertisseur (4) commandant le flux de puissance échangé avec l'accumulateur d'énergie (1) en fonction de la valeur U_ZK_r ou de son évolution, en régulant le courant d'accumulation I_S, en particulier le courant de charge, de l'accumulateur d'énergie (1) à une valeur de consigne I_Soll_2,
le redresseur étant conçu de manière à ce qu'un seul condensateur à film d'une capacité inférieure à 5 µF par kW de puissance de l'onduleur soit agencé dans le circuit intermédiaire, de sorte que l'ondulation de la tension de circuit intermédiaire augmente avec la puissance totale prélevée à partir du circuit intermédiaire.

2. Procédé selon la revendication 1,
**caractérisé en ce que**
une structure (22) présente une structure de régulation linéaire, en particulier un régulateur PI, grâce à laquelle la valeur de consigne de courant I_Soll_2 peut être fournie côté sortie et à laquelle la différence entre une valeur de consigne U_ZK_r_max et la valeur déterminée U_ZK_r est fournie côté entrée.

3. Procédé selon au moins l'une quelconque des revendications précédentes,
**caractérisé en ce que**
le raccord côté tension alternative du redresseur (5) peut être alimenté à partir d'un réseau d'alimentation en tension alternative (6).

4. Procédé selon au moins l'une quelconque des revendications précédentes,
**caractérisé en ce que**
le redresseur (5) est conçu comme un redresseur (5) pouvant être recyclé, en particulier pouvant être commandé, en particulier de sorte que la puissance électrique à partir du circuit intermédiaire peut être recyclée dans le réseau d'alimentation en tension alternative (6) lorsque la tension de circuit intermédiaire U_ZK dépasse une valeur limite supérieure.

5. Procédé selon au moins l'une quelconque des revendications précédentes,
**caractérisé en ce que**
l'état de charge de l'accumulateur d'énergie (1) est détecté au moyen d'un capteur.

6. Système d'entraînement pour la mise en œuvre d'un procédé selon au moins l'une quelconque des revendications précédentes,
l'accumulateur d'énergie (1) présentant un condensateur ou une batterie, et le moteur électrique (8) pouvant être alimenté par l'onduleur (7),
l'accumulateur d'énergie (1) étant connecté via un convertisseur CC/CC (4) au raccord côté tension continue d'un onduleur (7) alimentant le moteur électrique (8),
le convertisseur CC/CC (4) présentant un moyen de détection de la tension présente au niveau du raccord côté tension continue du convertisseur CC/CC (4) connecté en parallèle au raccord côté tension continue de l'onduleur (7),
le convertisseur (4) présentant un régulateur qui est configuré de manière appropriée pour réguler le courant d'accumulation I_S, en particulier le courant de charge, de l'accumulateur d'énergie (1) à une valeur de consigne I_Soll_2.
